# EUROPÄISCHE PATENTANMELDUNG

(11) **EP 2 645 374 A1**
(43) Veröffentlichungstag der Anmeldung: **02.10.2013**
(21) Anmeldenummer: 12161154.5
(22) Anmeldetag: 26.03.2012
(51) Int. Cl.: H01B 3/44, H02K 3/30, H02K 3/40

(54) **Zweilagiges Hochspannungsisolationssystem und elektrische Maschine**

(71) Anmelder: Siemens Aktiengesellschaft, 80333 München (DE)
(72) Erfinder: Röding, Roland, 99755 Ellrich (DE); Brockschmidt, Mario, 45131 Essen (DE); Gröppel, Peter, 91052 Erlangen (DE); Pohlmann, Friedhelm, 45355 Essen (DE); Rohr, Claus, 68219 Mannheim (DE)

(57) **Zusammenfassung**

Durch die Verwendung eines elektrisch leitfähigen PTFE-Gewebes werden Hochspannungsisolationssysteme vereinfacht und können dünner ausgeführt werden, wobei auch die thermische Leitfähigkeit verbessert wird.

## Beschreibung

Die Erfindung betrifft ein Hochspannungsisolationssystem und eine elektrische Maschine.

Hochspannungsisolationssysteme werden insbesondere für die Außenpotentialsteuerung rotierender elektrischen Maschinen verwendet.

In rotierenden elektrischen Maschinen, wie Motoren oder Generatoren, ist die Zuverlässigkeit des Isoliersystems maßgeblich für deren Betriebssicherheit verantwortlich. Das Isoliersystem hat die Aufgabe, elektrische Leiter (Drähte, Spulen, Stäbe) dauerhaft gegeneinander und gegen das Ständerblechpaket oder die Umgebung zu isolieren. Die Außenpotenzialsteuerung hat die Aufgabe, einen elektrischen Kontakt zwischen dem auf Erdpotenzial liegenden Ständerblechpaket und der Außenseite der Hauptisolierung zu realisieren. Dadurch wird sichergestellt, dass keine Teilentladungen in Hohlräumen im Bereich der Grenzschicht von Isolierung und Blechpaket auftreten.

Hierbei ist zu unterscheiden
- Außenglimmschutz (AGS) für Generatorwicklungsstäbe, die entsprechend Einzelstabfertigung hergestellt wurden (AGS-E)
- Außenglimmschutz (AGS) für Generatorwicklungsstäbe, die mittels GVPI-Prozess hergestellt wurden (AGS-G).

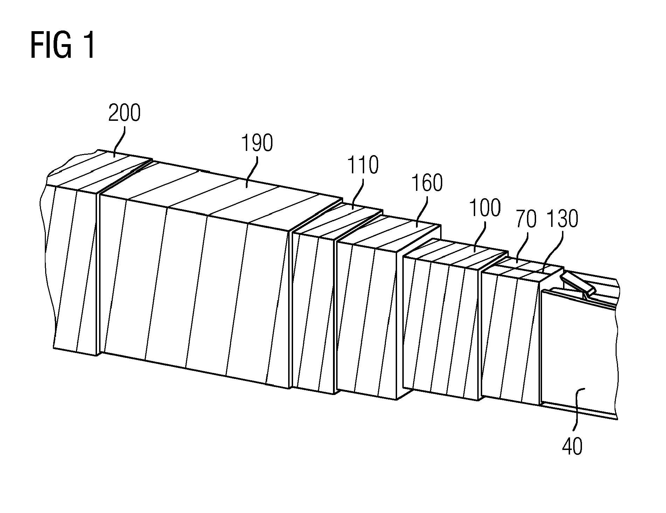

Bei ganzgetränkten Ständerwicklungen (Global Vacuum Pressure Impregnation GVPI) wird das gesamte Blechpaket mit einer vollständig eingebauten Wicklung gemeinsam getränkt und ausgehärtet. Dadurch ist die Verklebung der Wicklung in den Nuten des Blechpaketes so fest, dass es durch die die unterschiedlichen Ausdehnungskoeffizienten von Kupfer, Eisen und Isolierung zu hohen themomechanischen Spannungen zwischen Kupfer, Isolierung und Eisen kommt, die nach einer gewissen Anzahl von Wärmespielen (Starts und Stopps des Generators) zum Aufreißen der Grenzflächen führen. Um zu verhindern, dass die Spalte im elektrischen Feld liegen und die dort zündenden Teilentladungen die Isolierung zerstören, wird eine Innenpotentialsteuerung (IPS) eingesetzt, die in Figur 1 zusammen mit dem doppellagigen Außenglimmschutz (AGS) dargestellt ist.

### IPS:

Über den stromführenden Roebelstab aus Kupferteilleitern 40 wird ein isolierender Grundwickel 70 aus Feinglimmerband aufgebracht, der die Kantenradien der dünnen Kupferteilleiter 40 glättet und vergrößert.
Hierüber wird ein erstes graphithaltiges Leitvliesband 100 gewickelt, das über einen Kontaktstreifen 130 an nur einer Stelle mit dem Hochspannungspotential des Kupferteilleiters 40 verbunden ist.

### AGS:

Erst darauf wird die Hauptisolierung 160 aus Feinglimmerglas gewickelt. Anstelle der Kupferteilleiter bildet nun das erste Leitvliesband 100 die Hochspannungselektrode. Es ist dauerhaft mit der Hauptisolierung verklebt.
Auf der Hauptisolierung 160 folgt der innere
Außenglimmschutzwickel 110, ein äußerstes Trennband 190 und ein äußerer Außenglimmschutzwickel 200. Ein
Außenglimmschutzband, das im äußersten Trennband 190 verwoben ist, verbindet inneren 110 und äußeren 200
Außenglimmschutzwickel.

Die beim An- und Abfahren des Generators entstehenden thermomechanischen Spannungen zwischen dem Kupferleiterverband und der Isolierung können nach gewisser Betriebszeit zu lokalen Ablösungen der Isolierhülse vom Leiter führen, ohne dass in den entstehenden Spalten die gefürchteten Teilentladungen zünden. Der Bereich der Delamination ist potentialfrei, weil das Hochspannungspotential auf das an der Hauptisolierung fest backende Leitvlies übertragen wurde. Dieses IPS-Design an der hochbeanspruchten inneren Grenzfläche zwischen Leiter und Isolierung erlaubt einen Jahrzehnte langen Spitzenlastbetrieb von Turbogeneratoren ohne eine merkliche Teilentladungalterung

Für Generatorwicklungsstäbe, die entsprechend der Technologie der Einzelstabfertigung realisiert werden, erfolgt die Applikation eines Außenglimmschutzes in Form eines elektrisch leitfähigen Bandes oder Lackes. Bei dieser Technologie werden imprägnierte Isolierungen in einer Metallform ausgehärtet, um die gewünschte Geometrie der Isolierung zu realisieren. Dabei werden elektrisch leitfähige Lacke nach der Aushärtung, elektrisch leitfähige Bänder vor der Aushärtung appliziert.

Es ist daher Aufgabe der Erfindung, o.g. Probleme zu lösen.

Die Aufgabe wird gelöst durch ein Isolationssystem gemäß Anspruch 1 und eine elektrische Maschine gemäß Anspruch 16.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine Außenpotentialsteuerung eines Generatorwicklungsstabs nach dem Stand der Technik,
- Figur 2, 3: ein erfindungsgemäße Isolationssystem
- Figur 4: einen Generator.

Die Figuren und die Beschreibung stellen nur Ausführungsbeispiele der Erfindung dar.

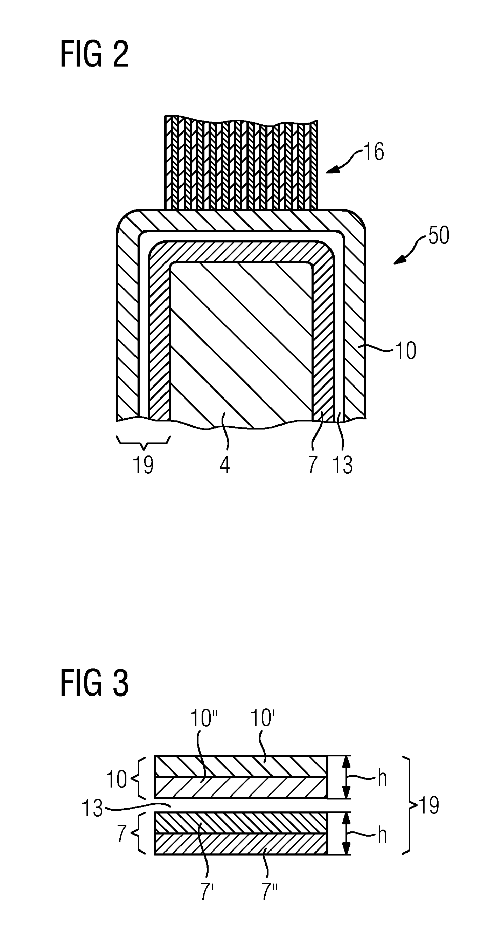

Figur 2 zeigt eine beispielhafte Anordnung einer Isolierung 50, insbesondere für die Lagen 190, 200.
In diesem Ausführungsbeispiel ist um einen metallischen Stab 4 eine Isolationslage 19 vorhanden, um diesen gegenüber dem Blechpaket 16 zu isolieren.
Die Isolationslage 19 weist vorzugsweise zwei Schichten 7, 10 auf. Die Schichten 7, 10 sind vorzugsweise in Bandform aufgewickelt und bilden zusammen die Isolationslage 19.
Die Schichten 7, 10 weisen vorzugsweise ein Gewebe, das wiederum vorzugsweise Fasern aufweist, auf.

Zwischen den Schichten 7, 10 ist eine Berührungsfläche 13 vorhanden. Vorzugsweise sind die Schichten 7, 10 durch aufgewickelte Bänder, vorzugsweise aus einem Gewebe, gebildet.

In der Figur 3 sind die Schichten 7, 10 im Querschnitt näher dargestellt.
Die Schichten 7, 10 weisen unterschiedliche physikalischen Eigenschaften, insbesondere jeweils einen hydrophoben 7', 10" und einen nicht hydrophoben (hydrophyl) Bereich (7", 10') auf. Der Oberbereich 10' der Schicht 10 ist hydrophyl, wobei der Unterbereich 10" hydrophob ist.
Umgekehrt dazu ist die Schicht 7 aufgebaut, wobei der Oberbereich 7' hydrophob ist. D.h., wenn diese zwei Schichten 7, 10 bzw. Bänder 7, 10 übereinander gewickelt werden, liegen die hydrophoben Bereiche 7', 10" gegeneinander an und sind in vorteilhafter Weise gegeneinander verschiebbar.

Durch den hydrophylen Anteil ist eine Imprägnierung, wie oben schon beschrieben, sehr gut möglich und im Bereich der Berührungsfläche 13 nicht, so dass eine relative Verschiebung der Bänder im Bereich der Berührungsfläche 13, unter einander zum Ausgleich mechanischer Spannungen gewährleistet ist.

Das Material der Schichten 7, 10 ist vorzugsweise PTFE, das entsprechend für die hydrophilen Bereiche 10', 7" verändert ist. Dies erfolgt beispielsweise durch eine lokale Beschichtung des PTFE, der Fasern oder des Gewebes, oder auf einen hydrophoben Bereich 10", 7' aus PTFE ist ein hydrophiles Material aufgebracht und bildet den Bereich 7", 10' .

Über das Verhältnis der Breite der eingesetzten Bänder 7, 10 ist es möglich, die Haftung zwischen der Außenseitenisolierung und der Oberfläche des umgebenden Blechpakets in einem weiten Bereich einzustellen.
Dies kann ebenfalls durch die Variation des Überlappungsgrads der beiden Bänder 7, 10 erfolgen.

Eine Kombination dieser beiden Gewebetypen stellt sicher, dass das Auftreten von thermomechanischen Spannungen abgebaut werden und eine ausreichende Haftung des Gesamtsystems sichergestellt ist, ohne dass ein Stab 4 innerhalb der Nut verrutschen kann. Gleichzeitig ist immer der elektrische Kontakt sichergestellt.

Ziel für AGS-E (E = Endglimmschutz):
- verbesserte Durckimprägnierung
- reduzierte Schichtdicke
- definierter und konstanter Oberflächenwiderstand unabhängig von der Imprägnierung
- verbesserte Lebensdauer und Zuverlässigkeit
- verbesserte Haftung und Temperaturstabilität
- vereinfachte Applikation, da die Anzahl der Produktionsschritte reduziert wird.

Anforderungen für AGS-E:
- Flächenwiderstand nach dem Applizieren 2 - 50kOhm (Oberflächenquadratwiderstand)
- Schichtdicke <= 100µm
- max. Breite 30mm
- gute Verarbeitbarkeit: ausreichende Festigkeit sowie Stabilität beim Abschneiden (kein Ausfransen), ausreichende Zugfestigkeit zum Wickeln.

Die Erfindung besteht weiterhin darin, dass man elektrisch leitfähiges PTFE (Teflon) als Isolation, insbesondere für ein solches Hochspannungsisolationssystem verwendet. Dies können einfache Systeme oder komplexere Systeme wie in Figur 1 sein. Das PTFE ist ein Kompositmaterial.

Das Hochspannungsisolationssystem 1 weist ein Gewebe aus PTFE auf, wobei dies so konstruiert ist, dass das Gewebe oder das Hochspannungsisolationssystem Poren aufweist, die wie oben nach dem beschriebenen Verfahren infiltriert werden können.

Vorzugsweise weist also das Hochspannungsisolationssystem Fasern aus PTFE auf, wobei zur Erzielung der elektrischen Leitfähigkeit von elektrisch nichtleitfähigen PTFE die Fasern vorzugsweise mit einem elektrischen leitfähigen Material, vorzugsweise Graphit vermischt ist.

Das Gewebe wird vorzugsweise aus solchen Fasern gebildet.

Ebenso können die PTFE Fasern elektrisch leitfähiges Material wie Graphit enthalten.

Dieses Gewebe ist vorzugsweise in Bandform vorhanden und wird für die Anwendung auf die zu isolierende Fläche umwickelt.

Dies wird vorzugsweise durch die Verwendung von elektrisch leitfähigem PTFE-Gewebe realisiert werden, dass folgende Vorteile aufweist:
- Gute Durchimprägnierbarkeit, da es sich um ein poröses Gewebe handelt und somit vor der Aushärtung appliziert werden kann.
- Unveränderter Widerstand vor und nach der Imprägnierung, da die Leitfähigkeit von Fasern herrührt und nicht von Partikeln wie beim AGS-Band. (Diese weisen aufgrund der nach der Imprägnierung die Partikel umhüllende Kunststoffmatrix einen anderen Widerstandswert im Vergleich zum Anfangswert auf).
- Aus der erfindungsgemäßen Anwendung elektrisch leitfähigen Materialien, die hydrophobe Eigenschaften aufweisen ist ein vereinfachter und dünnerer Aufbau des Außenglimmschutzsystems für ganzgetränkte rotierende Maschinen möglich. Dies begründet sich darin, dass der Spaltglimmer nicht mehr zum Einsatz kommen muss. Dieser hat im Stand der Technik die Aufgabe eventuelle thermomechanische Spannungen mittels partieller Delamination zu reduzieren.
- Aus der erfindungsgemäßen Anwendung hydrophober Materialien, die elektrisch leitfähigen Eigenschaften aufweisen ist ein vereinfachter und dünnerer Aufbau des Außenglimmschutzsystems für ganzgetränkte rotierende Maschinen möglich. Dies begründet sich darin, dass die Durchflechtung eines leitfähigen Bandes zur Kontaktierung der Außenseite der Isolierung und des Außenseite des Blechpaketes der Spaltglimmer nicht mehr zum Einsatz kommen muss. Dieser hat im Stand der Technik die Aufgabe bei auftretenden Delaminationen Potentialunterschiede auszugleichen.

Die Ziele für AGS-G sind:
- vereinfachte Applikation/Kostenreduktion
- reduzierte Schichtdicke des Doppel-AGS durch dünnere Alternative
- Verzicht auf Spaltglimmer
- Dauerhafter elektrischer Kontakt im Bereich der Außenseite der Isolierung und des Blechpaketes, auch nach thermisch induzierter Delamination.
- hohlraumfreier AGS
- verbesserte thermische Leitfähigkeit.

Der Ansatz für AGS-G lautet:
- Reduktion der Schichtdicke durch Einsatz einer Trennschicht, die eine definierte mechanische Entkopplung realisiert ohne, dass es zur Veränderung des elektrischen Widerstandes kommt. Dies soll durch den Ersatz der doppelten Lage Spaltglimmer durch hydrophobe Gewebetypen oder Folien realisiert werden. Dies kann insbesondere ein Teflongewebe sein.

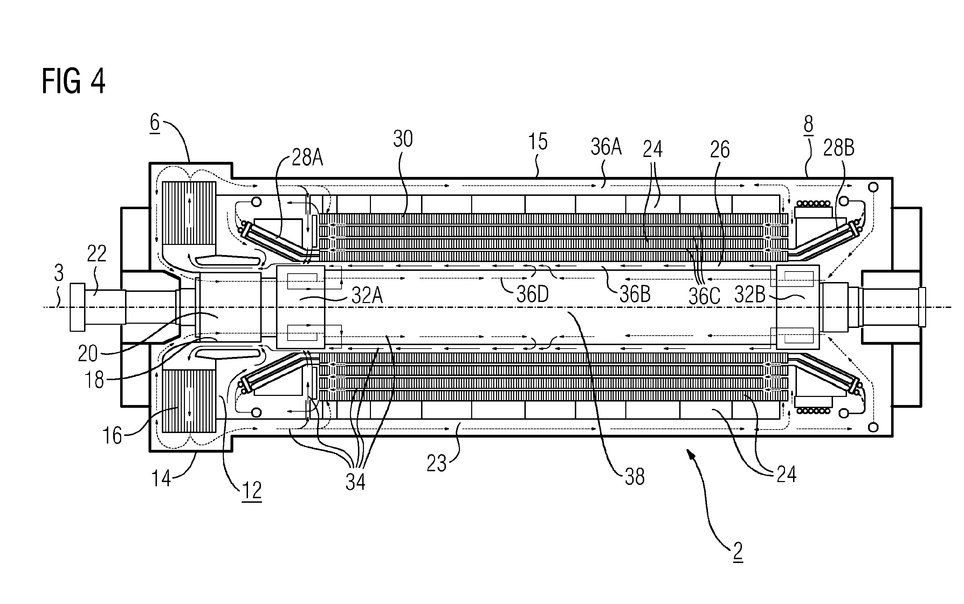

Die Figur 4 zeigt beispielhaft einen Generator als elektrische Maschine. Gemäß Figur 4 erstreckt sich eine Rotationsmaschinenanordnung, insbesondere eine Generatoranordnung 2 entlang einer Längsachse 3 von einem turbinenseitigen Endbereich 6 zu einem erregerseitigen Endbereich 8. Die Generatoranordnung 2 weist ein Gehäuse 10 auf. Im turbinenseitigen Endbereich 6 ist eine Kühlvorrichtung 12 angeordnet. Und zwar sind in einem Kühlerkopf 14, der ein Teil des Gehäuses 15 ist, zwei Kühler 16 und ein Verdichter in Form eines Gebläses 18 mit einer Gebläsenabe 20 angeordnet. Die Gebläsenabe 20 sitzt auf einem Läufer 22, der sich entlang der Längsachse 3 durch die Generatoranordnung 2 erstreckt. Im Anschluss an die Kühlvorrichtung 12 in Richtung der Längsachse 3 ist der eigentliche Generatorbereich 23 angeordnet. In diesem Bereich ist der Läufer 22 von einem Ständer 24 unter Bildung eines Luftspalts 26 umgeben. Der Ständer 24 weist eine Ständerwicklung mit einem turbinenseitigen Ständerwickelkopf 28A und mit einem erregerseitigen Ständerwickelkopf 28B auf. Zwischen den beiden Ständerwickelköpfen 28A, 28B ist ein sogenanntes Blechpaket 30 angeordnet. Analog zum Ständer 24 weist der Läufer 22 einen turbinenseitigen Läuferwickelkopf 32A und einen erregerseitigen Läuferwickelkopf 32B auf.

Aufgrund der bei Turbogeneratoren üblichen hohen Leistungsdichte ist eine Kühlung der Generatoranordnung 2 im Generatorbereich 23 notwendig. Einen besonders hohen Kühlbedarf haben hierbei die Ständerwickelköpfe 28A, 28B, sowie die Läuferwickelköpfe 32A, 32B. Zur Kühlung des Generatorbereichs 23 weist dieser ein Kühlsystem 34 auf, welches von der Kühlvorrichtung 12 mit Kühlgas versorgt wird. Das Kühlsystem 34 hat eine Anzahl von Kühlgaskanälen 36A, D, 48, über die das Kühlgas in einem Kreislauf geführt wird. Ein erster Kühlgaskanal 36A erstreckt sich hierbei in axialer Richtung und ist zwischen dem Ständer 24 und dem Gehäuse 10 angeordnet. Ein zweiter Kühlgaskanal 36B ist vom Luftspalt 26 gebildet. Weitere sich in axialer Richtung erstreckende Kühlgaskanäle 36C führen durch das Blechpaket 30. Zur Kühlung des Läufers 22 führt durch diesen ein Kühlgaskanal 36D. Die Kühlgasströmung im Generatorbereich 23 sowie in der Kühlvorrichtung 12 ist jeweils durch Pfeile angedeutet, wobei die gestrichelten Pfeile den Strömungsweg des kalten Kühlgases und die durchgezogenen Pfeile den Strömungsweg des erwärmten Kühlgases (Warmgas) angeben.

Zur Kühlung der Ständerwickelköpfe 28A, 28B teilt sich der von den Kühlern 16 kommende Kühlgas- Strom im turbinenseitigen Endbereich 6 auf. Der eine Teilstrom dient zur Kühlung des turbinenseitigen Ständerwickelkopfs 28A und der andere Teilstrom wird über den Kühlgaskanal 36A zum erregerseitigen Ständerwickelkopf 28B weitergeleitet und nochmals aufgeteilt. Der eine Teil dient zur Kühlung des Ständerwickelkopfs 28B und strömt von dort als Warmgas über den Luftspalt 26 wieder zurück. Der andere Teil wird durch die Kühlgaskanäle 36C des Blechpakets 30 geleitet und tritt im turbinenseitigen Endbereich 6 als Warmgas aus und wird den Kühlern 16 zugeführt. Zur Kühlung der Läuferwickelköpfe 32A, 32B wird Kühlgas in den Kühlgaskanal 36D des Läufers 22 sowohl vom turbinenseitigen Endbereich 6 als auch vom erregerseitigen Endbereich 8 eingeleitet. Ein Teilstrom des Kühlgases durchströmt die jeweiligen Läuferwickelköpfe 32A, 32B und wird anschließend in den Luftspalt 26 als Warmgas geleitet und den Kühlern 16 zugeführt. Der verbleibende Teilstrom wird im Kühlgaskanal 36D weiter durch den Läufer 22 hindurchgeführt, und zwar derart, dass das Kühlgas von den beiden Läuferwickelköpfen 32A, 32B aufeinander zuströmt und etwa im Mittenbereich 38 des Generatorbereichs 23 in den Luftspalt 26 geleitet wird.

## Patentansprüche

1. Hochspannungsisolationssystem (1),
das in zumindest einer Isolationslage (19, 70, 160, 200, 190) zweischichtig (7, 10),
insbesondere aus nur zwei Schichten (7, 10),
aufgebaut ist.

2. Hochspannungsisolationssystem (1) nach Anspruch 1,
bei dem die zwei Schichten (7, 10) verschiedene physikalische Eigenschaften aufweist.

3. Hochspannungsisolationssystem (1) nach einem oder beiden der Ansprüche 1 oder 2,
bei dem die jeweilige der zwei Schichten (7, 10) lokal verschiedene physikalische Eigenschaften aufweist, insbesondere entlang ihrer Dicke (h).

4. Hochspannungsisolationssystem (1) nach einem oder mehreren der Anspruch 1, 2 oder 3,
bei dem die zwei Schichten (7, 10) jeweils einen Oberbereich (7', 10') aufweisen,
der andere physikalische Eigenschaften aufweist als der Unterbereich (7" , 10") der Schichten (7, 10).

5. Hochspannungsisolationssystem (1) nach Anspruch 4,
bei dem der Oberbereich (10') der einen Schicht (10) und der Unterbereich (7") der anderen Schicht (7) hydrophil und
der Unterbereich (10") der einen Schicht (10) und der Oberbereich (7') der anderen Schicht (7) hydrophob ausgebildet ist.

6. Hochspannungsisolationssystem (1) nach Anspruch 5,
bei dem der hydrophobe Bereich (10", 7') durch PTFE gebildet sind.

7. Hochspannungsisolationssystem (1) nach einem oder beiden der Ansprüche 5 oder 6,
bei dem die hydrophoben Bereiche (7', 10") der Schichten (7, 10) direkt aufeinander angeordnet sind.

8. Hochspannungsisolationssystem (1) nach einem oder mehreren der Ansprüche 1 bis 7,
das elektrisch leitfähiges PTFE für die Schichten (7, 10) aufweist.

9. Hochspannungsisolationssystem nach einem oder mehreren der Ansprüche 1 bis 8,
bei dem die jeweilige Schicht (7, 10) durch ein gewickeltes Band gebildet ist.

10. Hochspannungsisolationssystem Anspruch 9,
bei dem die Breiten der Bänder für die Schichten (190, 200) verschieden sind.

11. Hochspannungsisolationssystem (1) nach einem oder beiden der Ansprüche 9 oder 10,
bei dem der Überlappungsgrad der Bänder (7, 10) die mechanische Festigkeit bestimmt.

12. Hochspannungsisolationssystem nach einem oder mehreren der Ansprüche 9 bis 11,
das ein Gewebe als Band aufweist.

13. Hochspannungsisolationssystem nach einem oder mehreren der Ansprüche 1 bis 12,
das Poren aufweist,
die insbesondere infiltriert sind.

14. Hochspannungsisolationssystem nach einem oder mehreren der Ansprüche 1 bis 13,
das Fasern in den Schichten (7, 10) aufweist, insbesondere aus PTFE,
ganz insbesondere ein Gewebe bildet.

15. Hochspannungsisolationssystem nach einem der vorhergehenden Ansprüche,
bei dem ein Gewebe oder Fasern für die Schichten (7, 10) mit elektrisch leitfähigem Material vermischt sind, insbesondere mit Graphit.

16. Elektrische Maschine mit Hochspannungsisolationssystem nach einem oder mehreren der vorherigen Ansprüchen, insbesondere Generator.
